# EUROPEAN PATENT SPECIFICATION

(11) **EP 1 155 079 B1**
(45) Date of publication and mention of the grant of the patent: **20.08.2003**
(21) Application number: 99964008.9
(22) Date of filing: 30.11.1999
(51) Int. Cl.: C08K 9/04, C08L 67/00

(54) **POLYMER/CLAY NANOCOMPOSITE AND PROCESS FOR MAKING SAME**
POLYMER/TON NANOKOMPOSIT UND VERFAHREN ZU SEINER HERSTELLUNG
NANOCOMPOSITE A BASE DE POLYMERE/D'ARGILE ET PROCEDE DE PREPARATION CORRESPONDANT

(30) Priority: 07.12.1998 US 111303 P
(43) Date of publication of application: 21.11.2001
(73) Proprietor: University of South Carolina Research Foundation, Columbia, South Carolina 29208 (US)
(72) Inventor: GILMER, John, Walker, Kingsport, TN 37660-4754 (US); MATAYABAS, James, Christopher, Jr., Chandler, Arizona 85224-7216 (US); BARBEE, Robert, Boyd, Kingsport, TN 37663-2131 (US)
(74) Representative: Brown, Fraser Gregory James
(86) International application number: US9928271
(87) International publication number: WO00034378

(56) References cited:
- EP-A- 0 542 266
- WO-A-84/03096
- WO-A-93/04117

## Description

### Field of the Invention

This invention relates generally to a polymer-clay nanocomposite having improved gas permeability comprising a clay material intercalated with a mixture of organic cations. This invention further relates to articles produced from the nanocomposite, and a process for preparing a nanocomposite.

### Background of the Invention

There is much interest in layered, clay-based polymer nanocomposites because of the improved properties exhibited by the nanocomposites. It is desirable to maximize delamination of the platelet particles into individual platelets in order to maximize some property improvements, including barrier improvements, molecular weight retention and to minimize deleterious effects on some properties including elongation-at-break. Ideally, the clay is exfoliated into particles with size less than about 20 nm in order to achieve clarity that is comparable to the clay-free polymer. To date, the only polymer/clay nanocomposites that meet this expectation are prepared by incorporation of organically treated clays during synthesis of the polymer from monomer.

Polyesters such as poly(ethylene terephthalate) (PET) are widely used in bottles and containers which are used for carbonated beverages, fruit juices, and certain foods. Useful polyesters have high molecular weight values as determined by solution viscometry, which allow polyesters to be formed into parisons and subsequently molded into containers. Because of the limited barrier properties with regard to oxygen, carbon dioxide and the like, PET containers are not generally used for products requiring long shelf life. For example, oxygen transmission into PET bottles which contain beer, wine and certain food products causes these products to spoil. There have been attempts to improve the barrier properties of PET containers by the use of multilayer structures comprising one or more barrier layers and one or more structural layers of PET. However, multilayer structures have not found wide use and are not suitable for use as a container for beer due to the high cost, the large thickness of the barrier layer required and poor adhesion of the barrier layer with the structural layer.

There are many examples in the patent literature of polymer/clay nanocomposites prepared from monomers and treated clays. For example, U.S. Patent 4,739,007 discloses the preparation of Nylon-6/clay nanocomposites from caprolactam and alkyl ammonium treated montmorillonite. U.S. Patent 4,889,885 describes the polymerization of various vinyl monomers such as methyl methacrylate and isoprene in the presence of sodium montmorillonite.

Some patents describe the blending of up to 60 weight percent of intercalated clay materials with a wide range of polymers including polyamides, polyesters, polyurethanes, polycarbonates, polyolefins, vinyl polymers, thermosetting resins and the like. Such high loadings with modified clays are impractical and useless with most polymers because the melt viscosity of the blends increases so much that they cannot be molded.

WO 93/04117 discloses a wide range of polymers melt blended with up to 60 weight percent of dispersed platelet particles. WO 93/04118 discloses nanocomposite materials of a melt processable polymer and up to 60 weight percent of a clay that is intercalated with organic onium salts. The use of clays intercalated with a mixture of onium ions is not contemplated nor disclosed.

U.S. Patent 5,552,469 describes the preparation of intercalates derived from certain clays and water soluble polymers such as polyvinyl pyrrolidone, polyvinyl alcohol, and polyacrylic acid. The use of clays intercalated with onium ions is specifically excluded.

JP Kokai patent no. 9-176461 discloses polyester bottles wherein the polyester contains unmodified sodium montmorillonite. Incorporation of the clay into the polyester by melt compounding is disclosed; however the use of clays intercalated with a mixture of onium ions was neither contemplated nor disclosed.

Clays intercalated with a mixture of onium ions are used as rheology modifiers for certain coating applications; however, their use in polymer/clay nanocomposites has been neither contemplated nor disclosed. The following references are of interest with regard to chemically modified organoclay materials: U.S. Patent Nos. 4,472,538; 4,546,126; 4,676,929; 4,739,007; 4,777,206; 4,810,734; 4,889,885; 4,894,411; 5,091,462; 5,102,948; 5,153,062; 5,164,440; 5,164,460; 5,248,720; 5,382,650; 5,385,776; 5,414,042; 5,552,469; WO Patent Application Nos. 93/04117; 93/04118; 93/11190; 94/11430; 95/06090; 95/14733; D. J. Greenland, J. Colloid Sci. 18, 647 (1963); Y. Sugahara et al., J. Ceramic Society of Japan 100, 413 (1992); P. B. Massersmith et al., J. Polymer Sci. Polymer Chem., 33, 1047 (1995); C.O. Sriakhi et al., J. Mater. Chem. 6, 103(1996).

It is also widely known that the amount of clay that can be admixed in a polymer and still exhibit exfoliation of the layered clay is limited and some mechanical properties, such as elongation-at-break, are often reduced considerably upon the addition of the clay. Researchers recognized the value of inventing melt compounding processes that provide exfoliated polymer/platelet particle composites, namely more versatility of polymer choice and clay loading, and the potential for cost savings. However, the melt compounding processes explored to date do not provide sufficient exfoliation of the platelet particles. Further, polyesters, especially PET, suffer from molecular weight loss, as indicated by the resulting inherent viscosity (I.V.), upon compounding with clay that is so severe that the polyester/clay nanocomposite cannot be used without increasing its I.V.

Therefore, as shown above, a need still exists for a polymer nanocomposite comprising a clay material and articles produced therefrom that have improved barrier properties and retain a high molecular weight.

### Summary of the Invention

It has been discovered that clays intercalated with two or more onium ions are useful for the preparation by a melt compounding process of a polymer/clay nanocomposite with sufficient exfoliation and molecular weight for improved properties and clarity for commercial applications, including film, bottles, and containers. The polymer nanocomposite materials of this invention are useful for forming articles or packages that have improved gas barrier properties over neat PET, for example. This invention also shows surprising improvement in molecular weight retention. Containers made from these polyester composite materials are ideally suited for protecting consumable products, such as foodstuffs, soft drinks, and medicines.

This invention also seeks to provide a cost-effective method for producing nanocomposite compositions and articles therefrom having sufficient oxygen barrier and clarity for wide spread applications as multilayer bottles and containers, including beer bottles. The polymer/clay nanocomposite compositions and process of this invention are especially suited for use in applications requiring crystalline, molded or thermoformed parts.

In accordance with the purpose(s) of this invention, as embodied and broadly described herein, this invention, in one embodiment, relates to a polymer-clay nanocomposite comprising (i) a melt-processible matrix polymer, and incorporated therein (ii) a clay-organic cation intercalate comprising a layered clay material intercalated with at least two organic cations, wherein at least one organic cation comprises ligands each having 7 or less carbons and at least one organic cation comprises a ligand having 12 or more carbons.

In another embodiment, this invention relates to a process for preparing a polymer-clay nanocomposite comprising (i) preparing an intercalated layered clay material by reacting a swellable layered clay material with at least two organic cations, wherein at least one organic cation comprises ligands each having 7 or less carbons and at least one organic cation comprises a ligand having 12 or more carbons, and (ii) incorporating the intercalated clay material in a matrix polymer by melt processing the matrix polymer with the intercalated clay.

Additional advantages of the invention will be set forth in part in the detailed description, which follows, and in part will be obvious from the description, or may be learned by practice of the invention. The advantages of the invention will be realized and attained by means of the elements and combinations particularly pointed out in the appended claims. It is to be understood that both the foregoing general description and the following detailed description are exemplary and explanatory of preferred embodiments of the invention, and are not restrictive of the invention, as claimed.

### Detailed Description of the Invention

The present invention may be understood more readily by reference to the following detailed description of the invention and the examples provided therein. It is to be understood that this invention is not limited to the specific processes and conditions described, as specific processes and/or process conditions for processing polymer articles as such may, of course, vary. It is also understood that the terminology used herein is for the purpose of describing particular embodiments only and is not intended to be limiting.

It must also be noted that, as used in the specification and the appended claims, the singular forms "a," "an" and "the" included plural references unless the context clearly dictates otherwise.

Ranges may be expressed herein as from "about" or "approximately" one particular value and/or to "about" or "approximately" another particular value. When such a range is expressed, another embodiment includes from the one particular and/or to the other particular value. Similarly, when values are expressed as approximations, by use of the antecedent "about," it will be understood that the particular value forms another embodiment.

### Definitions

Whenever used in this specification or claims, the terms set forth shall have the following meanings:
"Clay material, "layered clay" or "layered clay material" shall mean any organic or inorganic material or mixtures thereof, such as a smectite clay mineral, which is in the form of a plurality of adjacent, bound layers. The layered clay comprises platelet particles and is typically swellable.
"Platelet particles," "platelets" or "particles" shall mean individual or aggregate unbound layers of the layered clay material. These layers may be in the form of individual platelet particles, ordered or disordered small aggregates of platelet particles (tactoids), and small aggregates of tactoids.
"Dispersion" or "dispersed" is a general term that refers to a variety of levels or degrees of separation of the platelet particles. The higher levels of dispersion include, but are not limited to "intercalated" and "exfoliated."
"Intercalated" or "intercalate" shall mean a layered clay material that includes an intercalant disposed between adjacent platelet particles or tactoids of the layered material to increase the interlayer spacing between the adjacent platelets and tactoids. In this invention, the intercalant is preferably a mixture of 2 or more different types of organic cations.
"Exfoliate" or "exfoliated" shall mean platelets dispersed predominantly in an individual state throughout a carrier material, such as a matrix polymer. Typically, "exfoliated" is used to denote the highest degree of separation of platelet particles.
"Exfoliation" shall mean a process for forming an exfoliate from an intercalated or otherwise less dispersed state of separation.
"Nanocomposite(s)" or "nanocomposite composition(s)" shall mean a polymer or copolymer having dispersed therein a plurality of individual platelets obtained from an exfoliated, layered clay material.
"Matrix polymer" shall mean a thermoplastic or melt-processible polymer in which the platelet particles are dispersed to form a nanocomposite. In this invention, however, the platelet particles are predominantly exfoliated in the matrix polymer to form a nanocomposite.

### Description of the Embodiments

The present invention relates generally to melt compounding processes to prepare polymer/clay nanocomposite compositions and to certain polymer/clay nanocomposite compositions wherein the clay particles are treated with a mixture of two or more organic cation salts. The polymer/clay nanocomposites of this invention exhibit an unexpectedly lower gas permeability, especially oxygen permeability, than other layered polymer/clay nanocomposites prepared by melt compounding processes. The polymer/clay nanocomposites prepared by the process of this invention also have unexpectedly higher molecular weight, as indicated by higher weight average molecular weight or higher I.V., than other layered polymer/clay nanocomposites prepared by melt compounding processes. That is, the nanocomposites and process of this invention unexpectedly retain a higher molecular weight than other nanocomposites using an organic cation intercalated clay. The process of this invention may also be used to prepare a wide variety of polymer/clay nanocomposite compositions, the most preferred being polyester/clay nanocomposites.

More particularly, in one embodiment, this invention relates to a polyester composite material comprising (i) a melt-processible polymer and (ii) up to about 25 weight percent of a swellable layered clay material, wherein the clay material is intercalated with a mixture of at least one onium ion comprising ligands each with 7 or less carbon atoms and at least one onium ion comprising at least one ligand with 12 or more carbon atoms. The resulting platelet particles are dispersed in the polymer.

The prior art has defined the degree of separation of platelet particles based on peak intensity and basal spacing value, or lack of predominant basal spacing, as determined by X-ray analyses of polymer-platelet composites. Even though X-ray analysis alone often does not unambiguously predict whether or not the platelet particles are individually dispersed in the polymer, it can often allow quantification of the level of dispersion achieved. As such, X-ray analysis only provides information related to the well-ordered aggregates, which are only a small portion of the platelet particles present. Moreover, in polymer nanocomposites, X-ray analysis alone does not accurately predict either the dispersion of the platelet particles in the polymer or the resultant gas barrier improvement. TEM images of polymer-platelet composites show that platelet particles which are incorporated into at least one polymer exist in a variety of forms, including, but not limited to individual platelets (the exfoliated state), disordered agglomerates of platelets, well ordered or stacked aggregates of platelets (tactoids), swollen aggregates of stacked platelets (intercalated tactoids), and aggregates of tactoids.

Without being bound by any particular theory, it is believed that the degree of improved gas barrier (permeability) depends upon the embodiment ratio of the resulting particle platelets and aggregates, the degree to which they are dispersed or uniformly distributed, and the degree to which they are ordered perpendicular to the flux of the permeant.

To obtain the improvements in gas permeability according to the present invention, it is preferable that the platelet particles representative of the bulk of the composite be exfoliated, and preferably be highly exfoliated, in the matrix polymer such that the majority, preferably at least about 75 percent and perhaps as much as at least about 90 percent or more of the platelet particles, be dispersed in the form of individual platelets and aggregates having a thickness in the shortest dimension of less than about 20 nm and preferably less than about 10 nm, as estimated from TEM images. Polymer-platelet nanocomposites containing more individual platelets and fewer aggregates, ordered or disordered, are most preferred. Significant levels of incomplete dispersion (i.e., the presence of large agglomerates and tactoids greater than about 20 nm) not only lead to an exponential reduction in the potential barrier improvements attributable to the platelet particles, but also can lead to deleterious affects to other properties inherent to polymer resins such as strength, toughness, and heat resistance, and processability.

Again, without being bound by a particular theory, it is believed that delamination of platelet particles upon melt processing or mixing with a polymer requires favorable free energy of mixing, which has contributions from the enthalpy of mixing and the entropy of mixing. Melt processing clay with polymers results in a negative entropy of mixing due to the reduced number of conformations, which are accessible to a polymer chain when it resides in the region between two layers of clay. It is believed that poor dispersion is obtained using melt-processible polyesters, for example, because the enthalpy of mixing is not sufficient to overcome the negative entropy of mixing. In contrast, generally good dispersions are obtained with polyamides due to their hydrogen bonding character. However, the extent of this dispersion is frequently lessened because of the negative entropy of mixing. Heretofore, efforts to achieve a favorable enthalpy of mixing of platelet particles with melt processible polymers by pretreating the platelet particles (e.g., by cation exchange with alkyl ammonium ions) have been unsuccessful.

Regarding the present invention, it has been found that using clay intercalated with a mixture of organic cations while melt processing with a polymer gives good dispersion in a resulting nanocomposite, creating mostly individual platelet particles. The resulting nanocomposite has improved barrier to gas and a high molecular weight (and high I.V.) of the nanocomposite is retained.

More particularly, this invention relates to a polymer nanocomposite comprising a melt-processible polymer and up to about 25 weight percent of a swellable layered clay material which is intercalated with a mixture of at least two organic cations, preferably onium ions. The mixture comprises at least one organic cation having a ligand with 7 or less cations and at least one organic cation having a ligand with 12 or more carbon atoms. The intercalated clay material has platelet particles, which are dispersed in the polymer. The polymer nanocomposite is preferably a polyester polymer or copolymer nanocomposite having an I.V. of at least 0.5 dL/g as measured in 60 wt.%/40 wt.% phenol/1,1,2,2-tetrachloroethane at 25°C.

In one embodiment, a process for manufacturing the polymer nanocomposite of this invention comprises (1) preparing the intercalated layered clay material and (2) incorporating the intercalated layered clay material into a polymer by melt processing the polymer with the intercalated layered clay material. Melt processing includes melt and extrusion compounding. Use of extrusion compounding to mix the intercalated clay and the polymer presents advantages. Chiefly, the extruder is able to handle the high viscosity exhibited by the nanocomposite material. In addition, in a melt mixing approach for producing nanocomposite materials, the use of solvents can be avoided. Low molecular weight liquids can often be costly to remove from the nanocomposite resin.

The first step of this embodiment of the process of this invention is the preparation of the intercalated layered clay material by the reaction of a swellable layered clay with a mixture of organic cations, preferably ammonium compounds. The process to prepare the organoclay (intercalated clay) may be conducted in a batch, semi-batch, or continuous manner.

The nanocomposite composition of the present invention comprises less than about 25 weight percent, preferably from about 0.5 to about 20 weight percent, more preferably from about 0.5 to about 15 weight percent, and most preferably from about 0.5 to about 10 weight percent of clay. The amount of platelet particles is determined by measuring the amount of silicate residue in the ash of the polymer/platelet composition when treated in accordance with ASTM D5630-94. Useful clay materials include natural, synthetic, and modified phyllosilicates. Illustrative of such natural clays are smectite clays, such as montmorillonite, hectorite, mica, vermiculite, bentonite, nontronite, beidellite, volkonskoite, saponite, magadite, kenyaite, and the like. Illustrative of such synthetic clays are synthetic mica, synthetic saponite, synthetic hectorite, and the like. Illustrative of such modified clays are fluoronated montmorillonite, fluoronated mica, and the like. Suitable clays are available from various companies including Nanocor, Inc., Southern Clay Products, Kunimine Industries, Ltd., and Elementis-Rheox.

Generally, the layered clay materials useful in this invention are an agglomeration of individual platelet particles that are closely stacked together like cards, in domains called tactoids. The individual platelet particles of the clays preferably have thickness of less than about 2 nm and diameter in the range of about 10 to about 3000 nm. Preferably, the clays are dispersed in the polymer so that most of the clay material exists as individual platelet particles, small tactoids, and small aggregates of tactoids. Preferably, a majority of the tactoids and aggregates in the polymer/clay nanocomposites of the present invention will have thickness in its smallest dimension of less than about 20 nm. Polymer/clay nanocomposite compositions with the higher concentration of individual platelet particles and fewer tactoids or aggregates are preferred.

Moreover, the layered clay materials are typically swellable free flowing powders having a cation exchange capacity between about 0.3 and about 3.0 milliequivalents per gram of mineral (meq/g). The clay may have a wide variety of exchangeable cations present in the galleries between the layers of the clay, including, but not limited to cations comprising the alkaline metals (group IA), the alkaline earth metals (group IIA), and their mixtures. The most preferred cation is sodium; however, any cation or combination of cations may be used provided that most of the cations are exchanged for organic cations (onium ions) during the process of this invention.

Preferred clay materials are phyllosilicates of the 2:1 type having a cation exchange capacity of 0.5 to 2.0 meq/g, more preferably 0.9 to 1.2 meq/g. The most preferred clay materials are smectite clay minerals, particularly bentonite or montmorillonite, more particularly Wyoming-type sodium montmorillonite or Wyoming-type sodium bentonite.

Other non-clay materials having the above-described ion-exchange capacity and size, such as chalcogens, may also be used as the source of platelet particles under the present invention. Chalcogens are salts of a heavy metal and group VIA (O, S, Se, and Te). These materials are known in the art and do not need to be described in detail here.

The organic cation mixture used to intercalate the clay material of the nanocomposite of this invention is derived from organic cation salts, preferably onium salt compounds. Organic cation salts useful for the nanocomposite and process of this invention may generally be represented as follows: 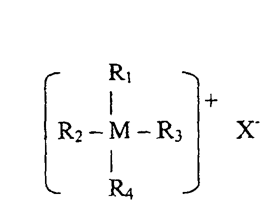 wherein M is either nitrogen or phosphorous; X⁻ is a halide, hydroxide, or acetate anion, preferably chloride and bromide; and R₁, R₂, R₃, and R₄ are independently organic and oligomeric ligands or may be hydrogen.

Organic cation salts comprising ligands each with 7 or less carbon atoms useful for the nanocomposite and process of this invention can be represented as follows: 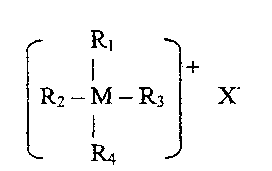 wherein M represents either nitrogen or phosphorous; X⁻ is a halide, hydroxide, or acetate anion, preferably chloride and bromide; R₁, R₂, R₃, and R₄ are independently organic and oligomeric ligands or may be hydrogen, but R₁-R₄ may not all be hydrogen.

Examples of useful organic ligands include, but are not limited to linear or branched alkyl groups having 1 to 7 carbon atoms, benzyl groups, aryl groups such as phenyl and substituted phenyl, beta, gamma unsaturated groups having six or less carbon atoms, and alkyleneoxide groups having repeating units comprising 2 to 6 carbon atoms.

Examples of useful organic cations include, but are not limited to alkyl ammonium ions, such as tetramethyl ammonium, hexyl ammonium, butyl ammonium, bis(2-hydroxyethyl) dimethyl ammonium, hexyl benzyl dimethyl ammonium, benzyl trimethyl ammonium, butyl benzyl dimethyl ammonium tetrabutyl ammonium di(2-hydroxyethyl) ammonium, and the like, and alkyl phosphonium ions such as tetrabutyl phosphonium, trioctyl octadecyl phosphonium, tetraoctyl phosphonium, octadecyl triphenyl phosphonium, and the like or mixtures thereof. The most preferred organic cation comprising ligands with 7 or less carbon atoms is tetramethyl ammonium.

Organic cation salts comprising at least one ligand with 12 or more carbon atoms useful for the nanocomposite and process of this invention can be represented as follows: 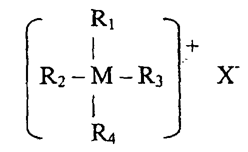 wherein M represents either nitrogen or phosphorous; X⁻ is a halide, hydroxide, or acetate anion, preferably chloride and bromide; R₁, R₂, R₃, and R₄ are independently organic and oligomeric ligands or may be hydrogen, provided that at least one ligand contains 12 or more carbon atoms and R₁- R₄ are not all hydrogen.

Examples of useful organic ligands include, but are not limited to linear or branched alkyl groups having 1 to 22 carbon atoms, aralkyl groups which are benzyl and substituted benzyl moieties including fused-ring moieties having linear chains or branches of 1 to 100 carbon atoms in the alkyl portion of the structure, aryl groups such as phenyl and substituted phenyl including fused-ring aromatic substituents, beta, gamma unsaturated groups having six or less carbon atoms, and alkyleneoxide groups having repeating units comprising 2 to 6 carbon atoms. Examples of useful oligomeric ligands include, but are not limited to poly(alkylene oxide), polystyrene, polyacrylate, polycaprolactone, and the like.

Other particularly useful organic cations for the organic cation mixture of this invention include, but are not limited to alkyl ammonium ions such as dodecyl ammonium, octadecyl trimethyl ammonium, bis(2-hydroxyethyl) octadecyl methyl ammonium, octadecyl benzyl dimethyl ammonium, and the like.

Illustrative examples of suitable polyalkoxylated ammonium compounds include the hydrochloride salts of polyalkoxylated amines such as JEFFAMINE (of Huntsman Chemical), namely, JEFFAMINE-506 and JEFFAMINE 505, and those available under the trade name ETHOMEEN (of Akzo Chemie America), namely, ETHOMEEN 18/25, which is octadecyl bis(polyoxyethylene[15])amine, wherein the numbers in brackets refer to the total number of ethylene oxide units. A further illustrative example of a suitable polyalkoxylated ammonium compound is ETHOQUAD 18/25 (of Akzo Chemie America), which is octadecyl methyl bis(polyoxyethylene[15]) ammonium chloride. The preferred organic cations for use in polyesters, such as polyethylene terephthalates, are polyalkoxylated ammonium compounds, preferably ETHOQUAD 18/25 which is octadecyl methyl bis(polyoxyethylene[15]) ammonium chloride, and ETHOMEEN. 18/25, which is octadecyl bis(polyoxyethylene[15])amine.

Numerous methods to modify layered clays with organic cations are known, and any of these may be used in the process of this invention.

One embodiment of this invention is the modification of a layered clay with a mixture of organic cation salts by the process of dispersing a layered clay into hot water, most preferably from 50 to 80°C, adding the organic cation salts separately or adding a mixture of the organic cation salts (neat or dissolved in water or alcohol) with agitation, then blending for a period of time sufficient for the organic cations to exchange most of the metal cations present in the galleries between the layers of the clay material. Then, the organically modified layered clay material is isolated by methods known in the art including, but not limited to filtration, sedimentation, centrifugation, spray drying, and their combinations.

It is desirable to use a sufficient amount of the organic cation salts to permit exchange of most of the metal cations in the galleries of the layered particle for organic cations; therefore, at least about 0.5 equivalent of total organic cation salts is used and up to about 3 equivalents of organic cation salts can be used. It is preferred that about 0.5 to 2 equivalents of organic cation salts be used, more preferable about 0.9 to 1.5 equivalents. It is desirable, but not required, to remove most of the metal cation salts and most of the excess organic cation salts by washing and other techniques known in the art.

The particle size of the resulting organoclay is reduced in size by methods known in the art, including, but not limited to grinding, pulverizing, hammer milling, jet milling, and their combinations. It is preferred that the average particle size be reduced to less than 100 micron in diameter, more preferably less than 50 micron in diameter, and most preferably less than 20 micron in diameter.

Although not preferred, the clays may be further treated for the purposes of aiding exfoliation in the composite and/or improving the strength of the polymer/clay interface. Any treatment that achieves the above goals may be used. Examples of useful treatments include intercalation with water-soluble or water-insoluble polymers, organic reagents or monomers, silane compounds, metals or organometallics, and/or their combinations. Treatment of the clay can be accomplished prior to the addition of a polymer to the clay material, during the dispersion of the clay with a polymer or during a subsequent melt blending or melt fabrication step.

Examples of useful pretreatment with polymers and oligomers include those disclosed in U.S. Patents 5,552,469 and 5,578,672, incorporated herein by reference. Examples of useful polymers for treating the mixed organic cation-intercalated clays include polyvinyl pyrrolidone, polyvinyl alcohol, polyethylene glycol, polytetrahydrofuran, polystyrene, polycaprolactone, certain water-dispersible polyesters, Nylon-6 and the like.

Examples of useful pretreatment with organic reagents and monomers include those disclosed in EP 780,340 Al, incorporated herein by reference. Examples of useful organic reagents and monomers for intercalating the swellable layered clay include dodecylpyrrolidone, caprolactone, caprolactam, ethylene carbonate, ethylene glycol, bishydroxyethyl terephthalate, dimethyl terephthalate, and the like or mixtures thereof.

Examples of useful pretreatment with silane compounds include those treatments disclosed in WO 93/11190, incorporated herein by reference. Examples of useful silane compounds includes (3-glycidoxypropyl)trimethoxysilane, 2-methoxy (polyethyleneoxy)propyl heptamethyl trisiloxane, octadecyl dimethyl (3-trimethoxysilylpropyl) ammonium chloride and the like.

If desired, a dispersing aid may be present during or prior to the formation of the composite by melt mixing for the purposes of aiding exfoliation of the treated or untreated swellable layered particles into the polymer. Many such dispersing aids are known, covering a wide range of materials including water, alcohols, ketones, aldehydes, chlorinated solvents, hydrocarbon solvents, aromatic solvents, and the like or combinations thereof.

It should be appreciated that on a total composition basis, dispersing aids and/or pretreatment compounds may account for significant amount of the total composition, in some cases up to about 30 weight percent. While it is preferred to use as little dispersing aid/pretreatment compound as possible, the amounts of dispersing aids and/or pretreatment compounds may be as much as about 8 times the amount of the platelet particles.

Any melt-processible polymer or oligomer may be used in this invention. Illustrative of melt-processible polymers are polyesters, polyetheresters, polyamides, polyesteramides, polyurethanes, polyimides, polyetherimides, polyureas, polyamideimides, polyphenyleneoxides, phenoxy resins, epoxy resins, polyolefins, polyacrylates, polystyrenes, polyethylene-co-vinyl alcohols (EVOH), and the like or their combinations and blends. Although the preferred polymers are linear or nearly linear, polymers with other architectures, including branched, star, cross-linked and dendritic structures, may be used if desired.

The preferred polymers include those materials that are suitable for use in the formation of multilayer structures with polyesters, and include polyesters, polyamides, polyethylene-co-vinyl alcohols (such as EVOH), and similar or related polymers and/or copolymers. The most preferred polyester is poly(ethylene terephthalate) and/or its copolymers. The most preferred polyamide is poly(*m*-xylylene adipamide and/or its copolymers.

Suitable polyesters include at least one dibasic acid and at least one glycol. The primary dibasic acids are terephthalic, isophthalic, naphthalenedicarboxylic, 1,4-cyclohexanedicarboxylic acid and the like. The various isomers of naphthalenedicarboxylic acid or mixtures of isomers may be used, but the 1,4-, 1,5-, 2,6-, and 2,7-isomers are preferred. The 1,4-cyclohexanedicarboxylic acid may be in the form of cis, trans, or cis/trans mixtures. In addition to the acid forms, the lower alkyl esters or acid chlorides may be also be used.

The matrix polymer may be prepared from one or more of the following dicarboxylic acids and one or more of the following glycols.

The dicarboxylic acid component of the polyester may optionally be modified with up to about 50 mole percent of one or more different dicarboxylic acids. Such additional dicarboxylic acids include dicarboxylic acids having from 3 to about 40 carbon atoms, and more preferably dicarboxylic acids selected from aromatic dicarboxylic acids preferably having 8 to 14 carbon atoms, aliphatic dicarboxylic acids preferably having 4 to 12 carbon atoms, or cycloaliphatic dicarboxylic acids preferably having 8 to 12 carbon atoms. Examples of suitable dicarboxylic acids include phthalic acid, isophthalic acid, naphthalene- 2,6-dicarboxylic acid, cyclohexanedicarboxylic acid, cyclohexanediacetic acid, diphenyl-4,4'-dicarboxylic acid, phenylene (oxyacetic acid) succinic acid, glutaric acid, adipic acid, azelaic acid, sebacic acid, and the like. Polyesters may also be prepared from two or more of the above dicarboxylic acids.

Typical glycols used in the polyester include those containing from two to about ten carbon atoms. Preferred glycols include ethylene glycol, propanediol, 1,4-butanediol, 1,6-hexanediol, 1,4-cyclohexanedimethanol, diethylene glycol and the like. The glycol component may optionally be modified with up to about 50 mole percent, preferably up to about 25 mole percent, and more preferably up to about 15 mole percent of one or more different diols. Such additional diols include cycloaliphatic diols preferably having 3 to 20 carbon atoms or aliphatic diols preferably having 3 to 20 carbon atoms. Examples of such diols include: diethylene glycol, triethylene glycol, 1,4-cyclohexanedimethanol, propane-1,3-diol, butane-1,4-diol, pentane-1,5-diol, hexane-1,6-diol, 3-methylpentanediol-(2,4), 2-methylpentanediol-(1,4), 2,2,4-trimethylpentane-diol-(1,3), 2-ethylhexanediol-(1,3), 2,2-diethylpropane-diol-(1,3), hexanediol-(1,3), 1,4-di-(2-hydroxyethoxy)-benzene, 2,2b-is-(4-hydroxycyclohexyl)-propane, 2,4-dihydroxy-1,1,3,3-tetramethyl-cyclobutane, 2,2-bis-(3-hydroxyethoxyphenyl)-propane, 2,2-bis-(4-hydroxypropoxyphenyl)-propane and the like. Polyesters may also be prepared from two or more of the above diols.

Small amounts of multifunctional polyols such as trimethylolpropane, pentaerythritol, glycerol and the like may be used, if desired. When using 1,4-cyclohexanedimethanol, it may be the cis, trans or cis/trans mixtures. When using phenylenedi(oxyacetic acid), it may be used as 1,2; 1,3; 1,4 isomers, or mixtures thereof.

The polymer may also contain small amounts of trifunctional or tetrafunctional comonomers to provide controlled branching in the polymers. Such comonomers include trimellitic anhydride, trimethylolpropane, pyromellitic dianhydride, pentaerythritol, trimellitic acid, trimellitic acid, pyromellitic acid and other polyester forming polyacids or polyols generally known in the art.

Suitable polyamides include partially aromatic polyamides, aliphatic polyamides, wholly aromatic polyamides and/or mixtures thereof. By "partially aromatic polyamide," it is meant that the amide linkage of the partially aromatic polyamide contains at least one aromatic ring and a nonaromatic species. Suitable polyamides have an article forming molecular weight and preferably an I.V. of greater than 0.4.

Preferred wholly aromatic polyamides comprise in the molecule chain at least 70 mole% of structural units derived from *m*-xylylene diamine or a xylylene diamine mixture comprising *m*-xylylene diamine and up to 30% of *p*-xylylene diamine and an aliphatic dicarboxylic acid having 6 to 10 carbon atoms, which are further described in Japanese Patent Publications No. 1156/75, No. 5751/75, No. 5735/75 and No. 10196/75 and Japanese Patent Application Laid-Open Specification No. 29697/75.

Polyamides formed from isophthalic acid, terephthalic acid, cyclohexanedicarboxylic acid, *meta-* or *para*-xylylene diamine, 1,3- or 1,4-cyclohexane(bis)methylamine, aliphatic diacids with 6 to 12 carbon atoms, aliphatic amino acids or lactams with 6 to 12 carbon atoms, aliphatic diamines with 4 to 12 carbon atoms, and other generally known polyamide forming diacids and diamines can be used. The low molecular weight polyamides may also contain small amounts of trifunctional or tetrafunctional comonomers such as trimellitic anhydride, pyromellitic dianhydride, or other polyamide forming polyacids and polyamines known in the art.

Preferred partially aromatic polyamides include, but are not limited to poly(*m*-xylylene adipamide), poly(*m*-xylylene adipamide-co-isophthalamide), poly(hexamethylene isophthalamide), poly(hexamethylene isophthalamide-co-terephthalamide), poly(hexamethylene adipamide-co-isophthalamide), poly(hexamethylene adipamide-co-terephthalamide), poly(hexamethylene isophthalamide-co-terephthalamide) and the like or mixtures thereof. More preferred partially aromatic polyamides include, but are not limited to poly(*m*-xylylene adipamide), poly(hexamethylene isophthalamide-co-terephthalamide), poly(*m*-xylylene adipamide-co-isophthalamide), and/or mixtures thereof. The most preferred partially aromatic polyamide is poly(*m*-xylylene adipamide).

Preferred aliphatic polyamides include, but are not limited to poly(hexamethylene adipamide) and poly(caprolactam). The most preferred aliphatic polyamide is poly(hexamethylene adipamide). Partially aromatic polyamides are preferred over the aliphatic polyamides where good thermal properties are crucial.

Preferred aliphatic polyamides include, but are not limited to polycapramide (nylon 6), poly-aminoheptanoic acid (nylon 7), poly-aminonanoic acid (nylon 9), polyundecane-amide (nylon 11), polyaurylactam (nylon 12), poly(ethylene-adipamide) (nylon 2,6), poly(tetramethylene-adipamide) (nylon 4,6), poly(hexamethylene-adipamide) (nylon 6,6), poly(hexamethylene-sebacamide) (nylon 6,10), poly(hexamethylene-dodecamide) (nylon 6,12), poly(octamethylene-adipamide) (nylon 8,6), poly(decamethylene-adipamide) (nylon 10,6), poly(dodecamethylene-adipamide) (nylon 12,6) and poly(dodecamethylene-sebacamide) (nylon 12,8).

The most preferred polyamides include poly(m-xylylene adipamide), polycapramide (nylon 6) and poly(hexamethylene-adipamide) (nylon 6,6). Poly(*m*-xylylene adipamide) is a preferred polyamide due to its availability, high barrier, and processability.

The polyamides are generally prepared by processes which are well known in the art.

Although not necessarily preferred, the polymers of the present invention may also include additives normally used in polymers. Illustrative of such additives known in the art are colorants, pigments, carbon black, glass fibers, fillers, impact modifiers, antioxidants, stabilizers, flame retardants, reheat aids, crystallization aids, acetaldehyde reducing compounds, recycling release aids, oxygen scavengers, plasticizers, nucleators, mold release agents, compatibilizers, and the like, or their combinations.

All of these additives and many others and their use are known in the art and do not require extensive discussion. Therefore, only a limited number will be referred to, it being understood that any of these compounds can be used in any combination so long as they do not hinder the present invention from accomplishing its objects.

This invention also relates to monolayer and multilayer articles prepared from the nanocomposite material of this invention, including, but not limited to film, sheet, pipes, tubes, profiles, molded articles, preforms, stretch blow molded films and containers, injection blow molded containers, extrusion blow molded films and containers, thermoformed articles and the like. The containers are preferably bottles.

The bottles and containers of this invention provide increased shelf storage life for contents, including beverages and food that are sensitive to the permeation of gases. Articles, more preferably containers, of the present invention often display a gas transmission or permeability rate (oxygen, carbon dioxide, water vapor) of at least 10% lower (depending on clay concentration) than that of similar containers made from clay-free polymer, resulting in correspondingly longer product shelf life provided by the container. Desirable values for the sidewall modulus and tensile strength may also be maintained.

The articles may also be multilayered. Preferably, the multilayered articles have a nanocomposite material disposed intermediate to other layers, although the nanocomposite may also be one layer of a two-layered article. In embodiments where the nanocomposite and its components are approved for food contact, the nanocomposite may form the food contact layer of the desired articles. In other embodiments it is preferred that the nanocomposite be in a layer other than the food contact layer.

The multilayer articles may also contain one or more layers of the nanocomposite composition of this invention and one or more layers of a structural polymer. A wide variety of structural polymers may be used. Illustrative of structural polymers are polyesters, polyetheresters, polyamides, polyesteramides, polyurethanes, polyimides, polyetherimides, polyureas, polyamideimides, polyphenyleneoxides, phenoxy resins, epoxy resins, polyolefins, polyacrylates, polystyrene, polyethylene-co-vinyl alcohols (EVOH), and the like or their combinations and blends. The preferred structural polymers are polyesters, such as poly(ethylene terephthalate) and its copolymers.

In another embodiment of this invention, the polymer-clay nanocomposite and the molded article or extruded sheet may be formed at the same time by co-injection molding or co-extruding.

Another embodiment of this invention is the combined use of silicate layers uniformly dispersed in the matrix of a high barrier thermoplastic together with the multilayer approach to packaging materials. By using a layered clay to decrease the gas permeability in the high barrier layer, the amount of this material that is needed to generate a specific barrier level in the end application is greatly reduced.

Since the high barrier material is often the most expensive component in multilayer packaging, a reduction in the amount of this material used can be quite beneficial. With the nanocomposite layer being sandwiched between two outer polymer layers, the surface roughness is often considerably less than for a monolayer nanocomposite material. Thus, with a multilayer approach, the level of haze is reduced.

### Examples

The following examples are put forth so as to provide those of ordinary skill in the art with a more complete disclosure and description of how the resin compositions claimed herein are made and evaluated. They are not intended to limit the scope of what the inventors regard as their invention. Efforts have been made to insure accuracy with respect to numbers (e.g., amounts, temperature, etc.) but some errors and deviations should be accounted for. Unless indicated otherwise, parts are by weight, temperature is in °C or is at room temperature and pressure is at or near atmospheric.

### Examples 1-7

70 grams of a refined Wyoming-type sodium montmorillonite with cation exchange capacity of about 0.95 meq/g of Southern Clay Products was added to 3.5 L of hot (about 85°C) distilled water then stirred for 1 minute in a Henschel high-speed multi-blade mixer with a heater attached to maintain the temperature at about 85°C while mixing. An aqueous solution of a mixture of octadecyl trimethyl ammonium chloride (ODTMAC) and tetramethyl ammonium chloride (TMAC) as listed in Table 1 was added to the Henschel mixer and blended for 1 minute. A white precipitate formed almost immediately after the addition of the ammonium salt to the clay slurry. The white precipitate was filtered, washed with distilled water with mixing in the Henschel mixer, filtered, then dried at 60°C overnight. The volume average particle size of the clay material is reduced to about 10 microns by hammer milling and then jet milling. The wide angle X-ray scattering (WAXS) basal spacing and silicate content (ash) were determined for the clay product as listed in Table 1.

4.3 grams of the ammonium intercalated clay was dry mixed with 395.7 grams of PET 9921 of Eastman Chemical Company, which is a poly(ethylene terephthalate) containing about 3.5 mole percent of 1,4-cyclohexane dimethanol (1,4-CHDM) and having an I.V. of about 0.72 dL/g. The dry. mixture was dried in a vacuum oven overnight at 120°C and then extruded at a barrel temperature of 270°C and die temperature of 280°C on a Leistritz Micro 18 twin screw extruder using general purpose screws. The extrudate was quenched in water and chopped into pellets as it exited the die. The WAXS basal spacing, silicate content (ash), I.V., and weight average molecular weight of the resulting polyester/clay nanocomposite was determined as listed in Table 2.

These examples illustrate the good retention of molecular weight observed by the nanocomposite compositions of this invention as indicated in Table 2 with the calculation of molecular weight retention. The molecular weight retention calculation is the ratio of the weight average molecular weight of the nanocomposite to the weight average molecular weight of the PET 9921 control.

**Table 1**

| Example | Mole Percent TMAC | Grams of TMAC | Grams of ODTMAC | Ash of Intercalated Clay (wt%) | Basal Spacing of Intercalated Clay (nm) |
|---|---|---|---|---|---|
| 1 | 0 | 0 | 25.41 | 69.2 | 1.88 |
| 2 | 20 | 1.60 | 20.30 | 73.2 | 1.78 |
| 3 | 35 | 2.79 | 16.52 | 77.9 | 1.66 |
| 4 | 50 | 3.99 | 12.70 | 80.1 | 1.37 |
| 5 | 65 | 5.19 | 11.40 | 82.2 | 1.35 |
| 6 | 80 | 6.38 | 5.08 | 85.8 | 1.50 |
| 7 | 100 | 8.00 | 0 | 88.2 | 1.53 |

**Table 2**

| Example | Mole Percent TMAC | Estimated Ash (wt%) | Basal Spacing (nm) | I.V. (dL/g) | M_{w} (kg/mole) | Molecular Weight Retention |
|---|---|---|---|---|---|---|
| 1 | 0 | 3.00 | 3.18 | 0.43 | 29.5 | 0.70 |
| 2 | 20 | 3.00 | 3.25 | 0.47 | 31.9 | 0.76 |
| 3 | 35 | 3.85 | 1.48 | 0.59 | 37.4 | 0.89 |
| 4 | 50 | 3.74 | 1.38 | 0.61 | 37.9 | 0.90 |
| 5 | 65 | 3.65 | 1.36 | 0.60 | 40.3 | 0.96 |
| 6 | 80 | 3.53 | 1.58 | 0.56 | 37.9 | 0.90 |
| 7 | 100 | 3.41 | 1.57 | 0.58 | 38.1 | 0.91 |

### Examples 8-13

The procedure of Examples 1-7 was repeated except that aqueous mixtures of octadecyl trimethyl ammonium chloride (ODTMAC) and triethanol ammonium chloride (TEAC) were used as shown in Table 3. The WAXS basal spacing, silicate content (ash), I.V., and weight average molecular weight of the resulting polyester/clay nanocomposite was determined as listed in Table 4.

**Table 3**

| Example | Mole Percent TEAC | Grams of TEAC | Grams of ODTMAC | Ash of Intercalated Clay (wt%) | Basal Spacing of Intercalated Clay (nm) |
|---|---|---|---|---|---|
| 1 | 0 | 0 | 25.41 | 69.2 | 1.88 |
| 8 | 20 | 2.72 | 20.30 | 74.3 | 1.85 |
| 9 | 35 | 4.75 | 16.52 | 77.9 | 1.72 |
| 10 | 50 | 6.79 | 12.70 | 80.2 | 1.41 |
| 11 | 65 | 8.82 | 11.40 | 81.2 | 1.59 |
| 12 | 80 | 10.90 | 5.08 | 86.4 | 1.53 |
| 13 | 100 | 13.60 | 0 | 87.7 | 1.50 |

**Table 4**

| Example | Mole Percent TEAC | Estimated Ash (wt%) | Basal Spacing (nm) | I.V. (dL/g) | M_{w} (kg/mole) | Molecular Weight Retention |
|---|---|---|---|---|---|---|
| 1 | 0 | 3.00 | 3.18 | 0.43 | 29.5 | 0.70 |
| 8 | 20 | 3.00 | 3.12 | 0.53 | 31.4 | 0.75 |
| 9 | 35 | 3.85 | 1.47 | 0.57 | 36.6 | 0.87 |
| 10 | 50 | 3.74 | 1.44 | 0.56 | 34.6 | 0.82 |
| 11 | 65 | 3.65 | 1.60 | 0.55 | 35.7 | 0.85 |
| 12 | 80 | 3.53 | 1.55 | 0.55 | 35.8 | 0.85 |
| 13 | 100 | 3.41 | 1.53 | 0.54 | 33.6 | 0.80 |

### Examples 14-21

The procedure of Examples 1-7 was repeated except that aqueous mixtures of Jeffamine-506 (EOAC), of Huntsman Chemical, which was analyzed to be oligooxyethylene amine with weight average molecular weight of about 1100 grams/mole, 1 equivalent of hydrochloric acid to make the ammonium hydrochloride salt of EOAC, and tetramethyl ammonium chloride (TMAC) were used as shown in Table 5. In addition, the barrel and die temperatures were 275°C instead of 270°C and 280°C, respectively, and the extrudates were cooled on an air belt, rather than in a water bath, before being chopped into pellets. The WAXS basal spacing, silicate content (ash), I.V., and weight average molecular weight of the resulting polyester/clay nanocomposites were determined as listed in Table 6.

**Table 5**

| Example | Mole Percent TMAC | Grams of TMAC | Grams of EOAC | Ash of Intercalated Clay (wt%) | Basal Spacing of Intercalated Clay (nm) |
|---|---|---|---|---|---|
| 14 | 0 | 0 | 74.81 | 73.7 | 1.7 |
| 15 | 20 | 1.46 | 58.15 | 73.2 | 1.67 |
| 16 | 30 | 2.18 | 50.88 | 76.3 | 1.63, 1.40 |
| 17 | 40 | 2.91 | 42.74 | 74.8 | 1.62, 1.40 |
| 18 | 50 | 3.64 | 36.34 | 75.5 | 1.58 |
| 19 | 60 | 4.37 | 29.08 | 78.3 | 1.62, 1.40 |
| 20 | 70 | 5.10 | 21.81 | 79.6 | 1.35 |
| 21 | 80 | 5.83 | 14.53 | 81.0 | 1.38 |

**Table 6**

| Example | Mole Percent TMAC | Ash (wt%) | Basal Spacing (nm) | Estimated I.V. (dL/g) | M_{w} (kg/mole) | Molecular Weight Retention |
|---|---|---|---|---|---|---|
| 14 | 0 | 3.14 | 1.40 | 0.56 | 35.7 | 0.85 |
| 15 | 20 | 2.90 | 1.40 | 0.61 | 39.8 | 0.95 |
| 16 | 30 | 2.66 | 1.40 | 0.61 | 39.7 | 0.95 |
| 17 | 40 | 3.00 | 1.40 | 0.61 | 40.3 | 0.96 |
| 18 | 50 | 2.60 | 1.41 | 0.61 | 39.7 | 0.95 |
| 19 | 60 | 2.47 | 1.41 | 0.62 | 40.5 | 0.96 |
| 20 | 70 | 2.53 | 1.41 | 0.61 | 39.4 | 0.94 |
| 21 | 80 | 2.40 | 1.41 | 0.60 | 39.0 | 0.93 |

### Comparative Examples 1-4

Varying amounts of Claytone APA, which is a benzyltrialkylammonium modified montmorillonite available from Southern Clay Products, were dry mixed with PET 9921 of Eastman Chemical Company, which is a poly(ethylene terephthalate) containing about 3.5 mole percent of 1,4-cyclohexane dimethanol and having I.V. of about 0.72 dL/g. The dry mixture was dried in a vacuum oven overnight at 120°C then extruded at a melt temperature of 280°C on a Leistritz Micro 18 twin screw extruder using general purpose screws and vacuum ventilation. The extrudate was quenched in water and chopped into pellets as it exited the die. As shown in Table 7, the I.V. of the polyester/clay nanocomposites decreases as the amount of platelet particles incorporated increases. Thus, these comparative examples illustrate the significant I.V. degradation observed when a clay intercalated with a single tetrasubstituted ammonium ion is melt compounded into a polyester.

### Comparative Examples 5-8

The procedure of Comparative Examples 1-4 was followed except that the polyester used was PET 13339 of Eastman Chemical Company, which is a polyethylene terephthalate containing about 3.5 mole percent of 1,4-CHDM and having I.V. of about 0.98 dL/g. As shown in Table 7, these polyester/clay nanocomposites also show significantly decreased I.V. compared to unmodified PET 13339. Clearly, the I.V. degradation observed for melt compounding polyesters with a clay intercalated with an ammonium ion cannot be overcome by increasing the I.V. of the initial polyester.

**Table 7**

| Comparative Example | I.V. of Initial PET (dL/g) | I.V. of PET/clay nanocomposite (dL/g) | Ash of PET/clay nanocomposite (wt%) |
|---|---|---|---|
| 1 | 0.72 | 0.68 | 0.36 |
| 2 | 0.72 | 0.62 | 1.8 |
| 3 | 0.72 | 0.53 | 4.7 |
| 4 | 0.72 | 0.48 | 6.7 |
| 5 | 0.98 | 0.77 | 0.31 |
| 6 | 0.98 | 0.65 | 1.8 |
| 7 | 0.98 | 0.57 | 4.3 |
| 8 | 0.98 | 0.50 | 6.8 |

### Comparative Example 9

This comparative example illustrates the degradation of molecular weight experienced by PET 9921, under the extrusion conditions used in the following example. PET 9921 of Eastman Chemical Company, which is a polyethylene terephthalate containing about 3.5 mole percent of 1,4-CHDM and having I.V. of about 0.72 dL/g, was dried overnight at 120°C then extruded at a barrel temperature of 270°C and die temperature of 280°C on a Leistritz Micro 18 twin screw extruder using general purpose screws. The extrudate was quenched in water and chopped into pellets as it exited the die. The average results from three different extrusions was determined to exhibit an I.V. of about 0.64 dL/g and a weight average molecular weight of about 42.0 kg/mole.

### Comparative Examples 10-13

The procedure of Examples 14-21 was repeated except that octadecyl trimethyl ammonium chloride (ODTMAC) was used in place of tetramethyl ammonium chloride (TMAC), as shown in Table 8. The WAXS basal spacing, silicate content (ash), I.V., and weight average molecular weight of the resulting polyester/clay nanocomposites were determined as listed in Table 9.

**Table 8**

| Comparative Example | Mole Percent ODTMAC | Grams of ODTMAC | Grams of EOAC | Ash of Intercalated Clay (wt%) | Basal Spacing of Intercalated Clay (nm) |
|---|---|---|---|---|---|
| 10 | 30 | 5.94 | 42.02 | 26.6 | 1.80 |
| 11 | 50 | 9.90 | 30.01 | 27.6 | 1.71 |
| 12 | 70 | 13.86 | 18.00 | 27.7 | 1.86 |
| 13 | 100 | 19.71 | 0 | 69.2 | 1.88 |

**Table 9**

| Mole Percent ComparativeODTMAC Example | | Ash (wt%) | Basal Spacing (nm) | Estimated IV (dL/g) | M_{w} (kg/mole) | Molecular Weight Retention |
|---|---|---|---|---|---|---|
| Example 14 | 0 | 3.14 | 1.40 | 0.56 | 35.7 | 0.85 |
| 10 | 30 | 2.91 | 1.41 | 0.56 | 35.7 | 0.85 |
| 11 | 50 | 3.16 | 3.83 | 0.55 | 34.7 | 0.83 |
| 12 | 70 | 3.19 | 3.35 | 0.54 | 33.1 | 0.79 |
| 13 | 100 | 3.00 | 3.18 | 0.42 | 29.4 | 0.70 |

These comparative examples illustrate that polyester nanocomposites prepared by melt compounding with a clay that is intercalated with a mixture of two ammonium compounds in which both ammonium compounds contain ligands with more than 7 carbon atoms do not show the good molecular weight retention observed for the compositions of this invention, as indicated by molecular weight retention that is less than or equal to the highest molecular weight retention when a clay that has been intercalated with a single organic cation is used.

Throughout this application, various publications are referenced. The disclosures of these publications in their entireties are hereby incorporated by reference into this application in order to more fully describe the state of the art to which this invention pertains.

It will be apparent to those skilled in the art that various modifications and variations can be made in the present invention without departing from the scope of the invention. Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A polymer-clay nanocomposite comprising:
(i) a melt-processible matrix polymer, and incorporated therein
(ii) a clay-organic cation intercalate comprising a layered clay material intercalated with at least two organic cations, wherein at least one organic cation comprises ligands each having 7 or less carbons and at least one organic cation comprises at least one ligand having 12 or more carbons.

2. The nanocomposite of claim 1, wherein the melt-processible matrix polymer comprises a polyester, polyetherester, polyamide, polyesteramide, polyurethane, polyimide, polyetherimide, polyurea, polyamideimide, polyphenyleneoxide, phenoxy resin, epoxy resin, polyolefin, polyacrylate, polystyrene, polyethylene-co-vinyl alcohol, or a copolymer thereof, or a mixture thereof.

3. The nanocomposite of claim 1, wherein the melt-processible matrix polymer comprises a partially aromatic polyamide, aliphatic polyamide, wholly aromatic polyamide or a mixture thereof.

4. The nanocomposite of claim 1, wherein the melt-processible matrix polymer comprises poly(*m*-xylylene adipamide), EVOH, or a copolymer thereof, or a mixture thereof.

5. The nanocomposite of claim 1, wherein the melt-processible matrix polymer comprises poly(ethylene terephthalate) or a copolymer thereof, or a mixture thereof.

6. The nanocomposite of claim 1, comprising greater than zero to about 25 weight percent of the layered clay material.

7. The nanocomposite of claim 1, comprising from about 0.5 to about 15 weight percent of the layered clay material.

8. The nanocomposite of claim 1, comprising from about 0.5 to about 10 weight percent of the layered clay material.

9. The nanocomposite of claim 1, wherein the layered clay material is a natural, synthetic or modified phyllosilicate.

10. The nanocomposite of claim 1, wherein the layered clay material comprises montmorillonite, saponite, hectorite, mica, vermiculite, bentonite, nontronite, beidellite, volkonskoite, magadite, kenyaite, or a mixture thereof.

11. The nanocomposite of claim 1, wherein the layered clay material comprises Wyoming-type sodium montmorillonite or Wyoming-type sodium bentonite.

12. The nanocomposite of claim 1, wherein the layered clay material is a free flowing powder having a cation exchange capacity from about 0.9 to about 1.5 meq/g.

13. The nanocomposite of claim 1, wherein at least 50 percent of the layered clay material is dispersed in the form of individual platelet particles and tactoids in the matrix polymer and the platelet particles have a thickness of less than about 2 nm and a diameter of from about 10 to about 3000 nm.

14. The nanocomposite of claim 1, wherein the organic cations are derived from onium salt compounds.

15. The nanocomposite of claim 14, wherein the onium salt compounds comprise ammonium or phosphonium salt compounds.

16. The nanocomposite of claim 1, wherein the organic cations comprise alkyl ammonium ions, alkyl phosphonium ions, polyalkoxylated ammonium ions, or mixtures thereof.

17. The nanocomposite of claim 16, wherein the alkyl ammonium ions are selected from the group consisting of tetramethyl ammonium, hexyl ammonium, butyl ammonium, bis(2-hydroxyethyl dimethyl ammonium, hexyl benzyl dimethyl ammonium, benzyl trimethyl ammonium, butyl benzyl dimethyl ammonium, tetrabutyl ammonium di(2-hydroxyethyl) ammonium, dodecyl ammonium, octadecyl trimethyl ammonium, bis(2-hydroxyethyl) octadecyl methyl ammonium and octadecyl benzyl dimethyl ammonium.

18. The nanocomposite of claim 16, wherein the alkyl phosphonium ions comprise tetrabutyl phosphonium, trioctyl octadecyl phosphonium, tetraoctyl phosphonium, or octadecyl triphenyl phosphonium.

19. The nanocomposite of claim 16, wherein the polyalkoxylated ammonium ions are derived from a hydrochloride salt of oligooxyethylene amine with a number average molecular weight of about 1100 g/mol, a hydrochloride salt of oligooxypropylene amine with a number average molecular weight of about 640 g/mol, octadecyl methyl bis(polyoxyethylene[15]) ammonium chloride, or octadecyl bis(polyoxyethylene[15])amine, wherein the numbers in brackets are the total number of ethylene oxide units.

20. The nanocomposite of claim 16, wherein the alkyl ammonium ions comprise tetramethyl ammonium, hexyl ammonium, butyl ammonium, bis(2-hydrooxyethyl dimethyl ammonium, hexyl benzyl dimethyl ammonium, benzyl trimethyl ammonium, butyl benzyl dimethyl ammonium, tetrabutyl ammonium di(2-hydroxyethyl) ammonium, dodecyl ammonium, octadecyl trimethyl ammonium, bis(2-hydroxyethyl) octadecyl methyl ammonium, or octadecyl benzyl dimethyl ammonium; wherein the alkyl phosphonium ions comprise tetrabutyl phosphonium, trioctyl octadecyl phosphonium, tetraoctyl phosphonium, or octadecyl triphenyl phosphonium; and wherein the polyalkoxylated ammonium ions are derived from a hydrochloride salt of oligooxyethylene amine with a number average molecular weight of about 1100 g/mol, a hydrochloride salt of oligooxypropylene amine with a number average molecular weight of about 640 g/mol, octadecyl methyl bis(polyoxyethylene[15]) ammonium chloride, or octadecyl bis(polyoxyethylene[15])amine, wherein the numbers in brackets are the total number of ethylene oxide units.

21. The nanocomposite of claim 1, wherein the organic cations comprise tetramethyl ammonium and octadecyl trimethyl ammonium.

22. The nanocomposite of claim 1, wherein the melt-processible matrix polymer comprises poly(ethylene terephthalate) or a copolymer thereof, the layered clay material comprises Wyoming-type sodium montmorillonite or Wyoming-type sodium bentonite, and the organic cations comprise tetramethyl ammonium and octadecyl trimethyl ammonium.

23. The nanocomposite of claim 1, having an I.V. of at least 0.5 dL/g as measured in 60 wt%/40 wt.% phenol/1,1,2,2-tetrachloroethane at 25°C.

24. An article prepared from the nanocomposite of claim 1.

25. The article of claim 24 in the form of film, sheet, pipe, an extruded article, a molded article or a molded container.

26. The article of claim 24 in the form of a bottle.

27. The article of claim 24, having a gas permeability which is at least 10 percent lower than that of an article formed from a clay-free polymer.

28. An article having a plurality of layers wherein at least one layer is formed from the nanocomposite of claim 1.

29. The article of claim 28, wherein the nanocomposite is disposed intermediate to two or more other layers.

30. The article of claim 28, having one or more layers of a structural polymer.

31. A process for preparing a polymer-clay nanocomposite comprising:
(i) preparing an intercalated layered clay material by reacting a swellable layered clay material with at least two organic cations, wherein at least one organic cation comprises ligands each having 7 or less carbons and at least one organic cation comprises at least one ligand having 12 or more carbons; and
(ii) incorporating the intercalated clay material in a matrix polymer by melt processing the matrix polymer with the intercalated clay.

32. The process of claim 31, wherein step (ii) is conducted by a melt compounding extrusion process.

33. A polymer-clay nanocomposite made by the process of claim 31.

## Patentansprüche

1. Ein Polymer-Ton-Nanokomposit, welches umfasst:
(i) ein schmelzverarbeitbares Matrixpolymer, und darin inkorporiert
(ii) ein Ton-organisches Kation-Interkalat, das ein geschichtetes Tonmaterial umfasst, das mit wenigstens zwei organischen Kationen interkaliert ist, worin wenigstens ein organisches Kation Liganden umfasst, die jeweils 7 oder weniger Kohlenstoffe aufweisen, und wenigstens ein organisches Kation wenigstens einen Liganden umfasst, der 12 oder mehr Kohlenstoffe aufweist.

2. Das Nanokomposit gemäß Anspruch 1, worin das schmelzverarbeitbare Matrixpolymer ein Polyester, Polyetherester, Polyamid, Polyesteramid, Polyurethan, Polyimid, Polyetherimid, Polyharnstoff, Polyamidimid, Polyphenylenoxid, Phenoxyharz, Epoxyharz, Polyolefin, Polyacrylat, Polystyrol, Polyethylen-co-vinylalkohol oder ein Copolymer davon oder eine Mischung davon umfasst.

3. Das Nanokomposit gemäß Anspruch 1, worin das schmelzverarbeitbare Matrixpolymer ein teilweise aromatisches Polyamid, aliphitische Polyamid, vollständig aromatisches Polyamid oder eine Mischung davon umfasst.

4. Das Nanokomposit gemäß Anspruch 1, worin das schmelzverarbeitbare Matrixpolymer Poly(*m*-xylylenadipamid), EVOH oder ein Copolymer davon oder eine Mischung davon umfasst.

5. Das Nanokomposit gemäß Anspruch 1, worin das schmelzverarbeitbare Matrixpolymer Poly(ethylenterephthalat) oder ein Copolymer davon oder eine Mischung davon umfasst.

6. Das Nanokomposit gemäß Anspruch 1, das mehr als 0 bis etwa 25 Gew-% des geschichteten Tonmaterials umfasst.

7. Das Nanokomposit gemäß Anspruch 1, das von etwa 0,5 bis etwa 15 Gew-% des geschichteten Tonmaterials umfasst.

8. Das Nanokomposit gemäß Anspruch 1, das von etwa 0,5 bis etwa 10 Gew-% des geschichteten Tonmaterials umfasst.

9. Das Nanokomposit gemäß Anspruch 1, in dem das geschichtete Tonmaterial ein natürliches, synthetisches oder modifiziertes Phyllosilicat ist.

10. Das Nanokomposit gemäß Anspruch 1, worin das geschichtete Tonmaterial Montmorillonit, Saponit, Hectorit, Mica, Vermiculit, Bentonit, Nontronit, Beidellit, Volkonskoit, Magadit, Kenyait oder eine Mischung davon umfasst.

11. Das Nanokomposit gemäß Anspruch 1, worin das geschichtete Tonmaterial Natriummontmorillonit vom Wyoming-Typ oder Natriumbentonit vom Wyoming-Typ umfasst.

12. Das Nanokomposit gemäß Anspruch 1, worin das geschichtete Tonmaterial ein frei fließendes Pulver ist, das eine Kationenaustauschkapazität von etwa 0,9 bis etwa 1,5 meq/g aufweist.

13. Das Nanokomposit gemäß Anspruch 1, worin wenigstens 50 % des geschichteten Tonmaterials in der Form von individuellen Plättchen-Teilchen und Tactoiden in dem Matrixpolymer dispergiert ist, und die Plättchen-Teilchen eine Dicke von weniger als etwa 2 nm und einen Durchmesser von etwa 10 bis etwa 3000 nm haben.

14. Das Nanokomposit gemäß Anspruch 1, worin die organischen Kationen von Oniumsalzverbindungen abgeleitet sind.

15. Das Nanokomposit gemäß Anspruch 14, worin die Oniumsalzverbindungen Ammonium- oder Phosphoniumsalzverbindungen umfassen.

16. Das Nanokomposit gemäß Anspruch 1, worin die organischen Kationen Alkylammoniumionen, Alkylphosphoniumionen, polyalkoxylierte Ammoniumionen oder Mischungen davon umfassen.

17. Das Nanokomposit gemäß Anspruch 16, worin die Alkylammoniumionen aus der Gruppe ausgewählt werden, die aus Tetramethylammonium, Hexylammonium, Butylammonium, Bis(2-hydroxyethyl)dimethylammonium, Hexylbenzyldimethylammonium, Benzyltrimethylammonium, Butylbenzyldimethylammonium, Tetrabutylammonium, Di(2-hydroxyethyl)ammonium, Dodecylammonium, Octadecyltrimethylammonium, Bis(2-hydroxyethyl)octadecylmethylammonium und Octadecylbenzyldimethylammonium besteht.

18. Das Nanokomposit gemäß Anspruch 16, worin die Alkylphosphoniumionen Tetrabutylphosphonium, Trioctyloctadecylphosphonium, Tetraoctylphosphonium oder Octadecyltriphenylphosphonium umfassen.

19. Das Nanokomposit gemäß Anspruch 16, worin die polyalkoxylierten Ammoniumionen von einem Hydrochloridsalz von Oligooxyethylenamin mit einem Zahlenmittel-Molekulargewicht von etwa 1100 g/Mol, einem Hydrochloridsalz von Oligooxypropylenamin mit einem Zahlenmittel-Molekulargewicht von etwa 640 g/Mol, Octadecylmethyl-bis(polyoxyethylen[15])ammoniumchlorid oder Octadecyl-bis(polyoxyethylen[15])amin abgeleitet sind, wobei die Zahlen in den Klammern der Gesamtanzahl von Ethylenoxideinheiten entsprechen.

20. Das Nanokomposit gemäß Anspruch 16, worin die Alkylammoniumionen Tetramethylammonium, Hexylammonium, Butylammonium, Bis(2-Hydroxyethyl)dimethylammonium, Hexylbenzyldimethylammonium, Benzyltrimethylammonium, Butylbenzyldimethylammonium, Tetrabutylammonium, Di(2-hydroxyethyl)ammonium, Dodecylammonium, Octadecyltrimethylammonium, Bis(2-hydroxyethyl)octadecylmethylammonium oder Octadecylbenzyldimethylammonium umfassen; worin die Alkylphosphoniumionen Tetrabutylphosphonium, Trioctyloctadecylphosphonium, Tetraoctylphosphonium oder Octadecyltriphenylphosphonium umfassen; und worin die polyalkoxylierten Ammoniumionen von einem Hydrochloridsalz von Oligooxyethylenamin mit einem Zahlenmittel-Molekulargewicht von etwa 1100 g/Mol, einem Hydrochloridsalz von Oligooxypropylenamin mit einem Zahlenmittel-Molekulargewicht von etwa 640 g/Mol, Octadecylmethyl-bis(polyoxyethylen[15])ammoniumchlorid oder Octadecyl-bis(Polyoxyethylen[15])amin abgeleitet sind, wobei die Nummern in den Zahlen der Gesamtzahl an Ethylenoxideinheiten entsprechen.

21. Das Nanokomposit gemäß Anspruch 1, worin die organischen Kationen Tetramethylammonium und Octadecyltrimethylammonium umfassen.

22. Das Nanokomposit gemäß Anspruch 1, worin das schmelzverarbeitbare Matrixpolymer Poly(ethylenterephthalat) oder ein Copolymer davon umfasst, das geschichtete Tonmaterial Natriummontmorillonit vom Wyoming-Typ oder Natriumbentonit vom Wyoming-Typ umfasst, und die organischen Kationen Tetramethylammonium und Octadecyltrimethylammonium umfassen.

23. Das Nanokomposit gemäß Anspruch 1, das eine I.V. von wenigstens 0,5 dL/g aufweist, gemessen in 60 Gew.-%/40 Gew.-% Phenol/1,1,2,2-Tetrachlorethan bei 25°C.

24. Ein Gegenstand, der aus dem Nanokomposit gemäß Anspruch 1 hergestellt ist.

25. Der Gegenstand gemäß Anspruch 24, in der Form von einem Film, Folie, Rohr, einem extrudierten Gegenstand, einem Formartikel oder einem Formbehälter.

26. Der Gegenstand gemäß Anspruch 24 in der Form einer Flasche.

27. Der Gegenstand gemäß Anspruch 24, der eine Gaspermeabilität aufweist, die wenigstens 10 % geringer ist als die von einem Gegenstand, der aus einem tonfreien Polymer gebildet ist.

28. Ein Gegenstand mit einer Vielzahl von Schichten, worin wenigstens eine Schicht aus dem Nanokomposit gemäß Anspruch 1 gebildet ist.

29. Der Gegenstand gemäß Anspruch 28, worin das Nanokomposit zwischen zwei oder mehr weiteren Schichten angeordnet ist.

30. Der Gegenstand gemäß Anspruch 28, der ein oder mehrere Schichten eines strukturellen Polymers aufweist.

31. Ein Verfahren zur Herstellung von einem Polymer-Ton-Nanokomposit, das umfasst:
(i) das Herstellen von einem interkaliertem geschichteten Tonmaterial durch Umsetzen von einem quellbaren geschichteten Tonmaterial mit wenigstens zwei organischen Kationen, worin wenigstens ein organisches Kation Liganden umfasst, die jeweils 7 oder weniger Kohlenstoffe aufweisen, und wenigstens ein organisches Kation wenigstens einen Liganden umfasst, der 12 oder mehr Kohlenstoffe aufweist; und
(ii) Inkorporieren des interkalierten Tonmaterials in ein Matrixpolymer durch Schmelzverarbeiten des Matrixpolymers mit dem interkalierten Ton.

32. Das Verfahren gemäß Anspruch 31, worin der Schritt (ii) mittels einem Schmelzmischextrusionsprozess durchgeführt wird.

33. Ein Polymer-Ton-Nanokomposit, das nach dem Verfahren gemäß Anspruch 31 hergestellt ist.

## Revendications

1. Nanocomposite de polymère-argile comprenant :
(i) un polymère de matrice pouvant être traité à chaud et, incorporé dans celui-ci
(ii) un intercalaire d'argile-cation organique comprenant un matériau d'argile en couches intercalé avec au moins deux cations organiques, dans lequel au moins un cation organique comprend des ligands ayant chacun 7 carbones ou moins et au moins un cation organique comprend au moins un ligand ayant 12 carbones ou plus.

2. Nanocomposite selon la revendication 1, dans lequel le polymère de matrice pouvant être traité à chaud comprend un polyester, un polyétherester, un polyamide, un polyestéramide, un polyuréthane, un polyimide, un polyétherimide, une polyurée, un polyamideimide, un oxyde de polyphénylène, une résine phénoxy, une résine époxy, une polyoléfine, un polyacrylate, un polystyrène, un copolymère polyéthylène-alcool vinylique, ou un copolymère de ceux-ci et un mélange de ceux-ci.

3. Nanocomposite selon la revendication 1, dans lequel le polymère de matrice pouvant être traité à chaud comprend un polyamide partiellement aromatique, un polyamide aliphatique, un polyamide complètement aromatique ou un mélange de ceux-ci.

4. Nanocomposite selon la revendication 1, dans lequel le polymère de matrice pouvant être traité à chaud comprend un poly(*m*-xylylène-adipamide), EVOH, ou un copolymère de ceux-ci, ou un mélange de ceux-ci.

5. Nanocomposite selon la revendication 1, dans lequel le polymère de matrice pouvant être traité à chaud comprend un poly(éthylène-téréphtalate) ou un copolymère de celui-ci, ou un mélange de celui-ci.

6. Nanocomposite selon la revendication 1, comprenant plus de zéro à environ 25 % en poids du matériau d'argile en couches.

7. Nanocomposite selon la revendication 1, comprenant d'environ 0,5 à environ 15 % en poids du matériau d'argile en couches.

8. Nanocomposite selon la revendication 1, comprenant d'environ 0,5 à environ 10 % en poids du matériau d'argile en couches.

9. Nanocomposite selon la revendication 1, dans lequel le matériau d'argile en couches est un phyllosilicate naturel, synthétique ou modifié.

10. Nanocomposite selon la revendication 1, dans lequel le matériau d'argile en couches comprend la montmorillonite, la saponite, l'hectorite, le mica, la vermiculite, la bentonite, la notronite, la beidellite, la volkonskoïte, la magadite, la kenyaite, ou un mélange de ceux-ci.

11. Nanocomposite selon la revendication 1, dans lequel le matériau d'argile en couches comprend une montmorillonite sodique de type Wyoming ou une bentonite sodique de type Wyoming.

12. Nanocomposite selon la revendication 1, dans lequel le matériau d'argile en couches est une poudre à haute fluidité ayant une capacité d'échange de cations d'environ 0,9 à environ 1,5 meq/g.

13. Nanocomposite selon la revendication 1, dans lequel au moins 50 % en poids du matériau d'argile en couches est dispersé sous la forme de particules en plaquette et de tactoides individuels dans le polymère de matrice et les particules en plaquettes ont une épaisseur inférieure à environ 2 mm et un diamètre d'environ 10 à environ 3000 nm.

14. Nanocomposite selon la revendication 1, dans lequel les cations organiques sont dérivés de composés de sel d'onium.

15. Nanocomposite selon la revendication 14, dans lequel les composés de sel d'onium comprennent des composés de sel d'ammonium ou de phosphonium.

16. Nanocomposite selon la revendication 1, dans lequel les cations organiques comprenant des ions alkylammonium, des ions alkylphosphonium, des ions ammonium polyalcoxylés, ou des mélanges de ceux-ci.

17. Nanocomposite selon la revendication 16, dans lequel les ions alkylammonium sont choisis dans le groupe consistant en le tétraméthylammonium, l'hexylammonium, le butylammonium, le bis(2-hydroxyéthyl)diméthylammonium, l'hexylbenzyldiméthylammonium, le benzyltriméthylammonium, le butylbenzyldiméthylammonium, le tétrabutylammonium, le di(2-hydroxyéthyl)ammonium, le dodécylammonium, l'octadécyltriméthylammonium, le bis(2-hydroxyéthyl)octadécylméthylammonium, et l'octadécyl-benzyidiméthylammonium.

18. Nanocomposite selon la revendication 16, dans lequel les ions alkylphosphonium comprennent le tétrabutylphosphonium, le trioctyloctadécylphosphonium, le tétraoctylphosphonium, ou l'octadécyltriphényl-phosphonium.

19. Nanocomposite selon la revendication 16, dans lequel les ions ammonium polyalcoxylés sont dérivés d'un sel chlorhydrate d'oligooxyéthylèneamine ayant un poids moléculaire moyen en nombre d'environ 1100 g/mole, un sel chlorhydrate d'oligooxypropylèneamine ayant un poids moléculaire moyen en nombre d'environ 640 g/mole, le chlorure d'octadécylméthyl-bis(polyoxyéthylène[15])-ammonium, ou l'octadécyl-bis(polyoxyéthylèné[15])amine, dans lesquels les nombres entre crochets sont le nombre total de groupes oxyde d'éthylène.

20. Nanocomposite selon la revendication 16, dans lequel les ions alkylammonium comprennent le tétraméthylammonium, l'hexylammonium, le butylammonium, le bis(2-hydroxyéthyl)diméthylammonium, l'hexylbenzyl-diméthylammonium, le benzyltriméthylammonium, le butylbenzyldiméthylammonium, le tétrabutylammonium, le di(2-hydroxyéthyl)ammonium, le dodécylammonium, l'octadécyltriméthylammonium, le bis(2-hydroxyéthyl)-octadécylméthylammonium, ou l'octadécylbenzyldiméthyl-ammonium ; dans lequel les ions alkylphosphonium comprennent le tétrabutylphosphonium, le trioctyloctadécylphosphonium, le tétraoctylphosphonium, ou l'octadécyltriphénylphosphonium ; et dans lequel les ions ammonium polyalcoxylés sont dérivés d'un sel chlorhydrate d'oligooxyéthylèneamine ayant un poids moléculaire moyen en nombre d'environ 1100 g/mole, un sel chlorhydrate d'oligooxypropylèneamine ayant un poids moléculaire moyen en nombre d'environ 640 g/mole, le chlorure d'octadécylméthyl-bis(polyoxyéthylène[15])-ammonium, ou l'octadécyl-bis(polyoxyéthylène[15])amine, dans lesquels les nombres entre crochets sont le nombre total de groupes oxyde d'éthylène.

21. Nanocomposite selon la revendication 1, dans lequel les cations organiques comprennent le tétraméthylammonium et l'octadécyltriméthylammonium.

22. Nanocomposite selon la revendication 1, dans lequel dans lequel le polymère de matrice pouvant être traité à chaud comprend un poly(éthylène-téréphtalate) ou un copolymère de celui-ci, le matériau d'argile en couches comprend une montmorillonite sodique de type Wyoming ou une bentonite sodique de type Wyoming, et les cations organiques comprennent le tétraméthylammonium et l'octadécyltriméthylammonium.

23. Nanocomposite selon la revendication 1, ayant un indice d'iode d'au moins 0,5 dl/g mesuré dans 60 % en poids/40 % en poids phénol/1,1,2,2-tétrachloroéthane 60 % en poids/40 % en poids à 25°C.

24. Article préparé à partir du nanocomposite selon la revendication 1.

25. Article selon la revendication 24 sous la forme de film, de feuille, de tuyau, d'un article extrudé, d'un article moulé ou d'un conteneur moulé.

26. Article selon la revendication 24 sous la forme d'une bouteille.

27. Article selon la revendication 24, ayant une perméabilité au gaz qui est au moins 10 % plus faible que celle d'un article formé à partir de polymère sans argile.

28. Article ayant une pluralité de couches dans lequel au moins une couche est formée à partir du nanocomposite selon la revendication 1.

29. Article selon la revendication 28, dans lequel le nanocomposite est disposé en position intermédiaire entre deux autres couches ou plus.

30. Article selon la revendication 28, ayant une ou plusieurs couches d'un polymère structurel.

31. Procédé pour préparer un nanocomposite polymère-argile comprenant les étapes consistant à :
(i) préparer un matériau d'argile en couches intercalé par réaction d'un matériau d'argile en couches pouvant gonfler avec au moins deux cations organiques, dans lequel au moins un cation organique comprend des ligands ayant chacun 7 carbones ou moins et au moins un cation organique comprend au moins un ligand ayant 12 carbones ou plus ; et
(ii) incorporer le matériau d'argile intercalé dans un polymère de matrice par traitement à chaud du polymère de matrice avec l'argile intercalée.

32. Procédé selon la revendication 31, dans lequel l'étape (ii) est conduite selon un procédé d'extrusion de composition à chaud.

33. Nanocomposite polymère-argile préparé selon le procédé de la revendication 31.
